(19) Europäisches Patentamt
European Patent Office
Office européen des brevets

(11) **EP 4 371 769 A1**

(12) **EUROPEAN PATENT APPLICATION**
published in accordance with Art. 153(4) EPC

(43) Date of publication:
**22.05.2024 Bulletin 2024/21**

(21) Application number: **22841834.9**

(22) Date of filing: **02.06.2022**

(51) International Patent Classification (IPC):
**B32B 27/32** (2006.01)   **C08F 210/14** (2006.01)
**C09J 7/24** (2018.01)   **C09J 7/29** (2018.01)
**C09J 7/30** (2018.01)   **C09J 123/00** (2006.01)
**C09J 123/26** (2006.01)

(52) Cooperative Patent Classification (CPC):
**B32B 27/32; C08F 210/14; C09J 7/24; C09J 7/29;
C09J 7/30; C09J 123/00; C09J 123/26**

(86) International application number:
**PCT/JP2022/022448**

(87) International publication number:
**WO 2023/286487 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.07.2021 JP 2021115000**

(71) Applicant: **TOYOBO CO., LTD.**
**Osaka-shi, Osaka 530-0001 (JP)**

(72) Inventors:
• **TANAKA,Yoshitaka**
**Inuyama-shi, Aichi 484-8508 (JP)**
• **WATANABE,Shigeyuki**
**Otsu-shi, Shiga 520-0292 (JP)**
• **FUNAOKA,Daiki**
**Nagoya-shi, Aichi 452-0805 (JP)**
• **MASUDA,Takafumi**
**Takasago-shi, Hyogo 676-0082 (JP)**

(74) Representative: **Vossius & Partner
Patentanwälte Rechtsanwälte mbB
Siebertstrasse 3
81675 München (DE)**

(54) **HEAT-FUSIBLE LAMINATED FILM**

(57)    Provided are a heat-sealable laminated film which has a high adhesion force at a laminated interface and has a good bonded state when being heat-sealed, and a roll obtained by rolling the heat-sealable laminated film. A heat-sealable laminated film includes a layer B, a layer C, a layer A, a layer C, and a layer B in this order. At least the layer C, the layer A, and the layer C are laminated by co-extrusion. The layer A contains 100 to 70% by mass of a polymer A1 containing 90 mol% or more and 100 mol% or less of a constitutional unit derived from 4-methyl-1-pentene with respect to all constitutional units. The layer B contains 100 to 70% by mass of a heat-sealable polyolefin B1. The layer C contains 50% by mass or more of a copolymer C1 containing 60 mol% or more and 99 mol% or less of a constitutional unit derived from 4-methyl-1-pentene and 1 mol% or more and 40 mol% or less of a constitutional unit derived from an $\alpha$-olefin having 2 or more and 20 or less carbon atoms other than 4-methyl-1-pentene.

EP 4 371 769 A1

**Description**

TECHNICAL FIELD

The present invention relates to a heat-sealable laminated film in which a heat-sealable layer (hereinafter, sometimes referred to as a "layer B") is provided on each of both surfaces of a substrate layer (hereinafter, sometimes referred to as a "layer A") with an easily adhesive layer (hereinafter, sometimes referred to as a "layer C") interposed therebetween, and a roll obtained by rolling the heat-sealable laminated film.

BACKGROUND ART

A heat-sealable film or sheet is a laminated body in which a heat-sealable layer is provided on the outermost surface of at least one side of a substrate, and is used for various applications for purposes of packaging and reinforcing and the like in a method in which a heat-sealable layer is bonded to an adherend made of a resin or a metal. The substrate is selected according to the purposes, but a resin substrate is often used, and an appropriate resin is selected according to required characteristics.

In order to obtain an excellent adhesion force to the adherend, not only an adhesion force between the adherend and the heat-sealable layer but also a high adhesion force between the substrate and the heat-sealable layer is required. This is because a region having the weakest adhesion would be broken or peeled off against an external stress.

Patent Document 1 discloses, as the heat-sealable laminated film, for example, a laminated film for tab lead in which a heat-resistant resin layer (C) is provided between a heat-sealable resin layer (A) containing a modified polypropylene-based resin or the like and a similar heat-sealable resin layer (B), and the heat-resistant resin layer (C) contains a copolymer of 4-methyl-1-pentene and $\alpha$-olefin and an $\alpha$-olefin-based resin (1) having a melting point of 30°C to 110°C.

However, from the viewpoint of the need to secure an adhesion force between the heat-resistant resin layer (C) which is a substrate and the heat-sealable resin layer, it has been necessary to adjust the content of the $\alpha$-olefin of the copolymer contained in the heat-resistant resin layer (C) to a certain level or more, or to add the $\alpha$-olefin-based resin (1) at a certain level or more. For this reason, the heat resistance and mechanical properties of the substrate layer cannot be said to be sufficient when heat sealing is performed.

Meanwhile, a technique using a substrate layer having further enhanced heat resistance is also known, and there is also a technique of providing an easily adhesive layer (also referred to as an "intermediate layer") between the substrate layer and a heat-sealable layer to improve an adhesion force between both the layers. For example, Patent Document 2 proposes a heat-sealable laminated film in which an easily adhesive layer containing a resin obtained by modifying a copolymer of propylene and 1-butene with maleic acid is provided between a heat-sealable layer containing an acid-modified polyolefin or the like and a substrate layer containing a methylpentene polymer or the like.

Meanwhile, Patent Document 3 does not relate to the heat-sealable laminated film, and discloses a technique for bonding a thermoplastic resin layer (X) and a thermoplastic resin layer (Y) using an adhesive resin composition containing a propylene-based polymer (A), an ethylene-based polymer (B), and a thermoplastic resin (C) containing a copolymer containing 60 mol% or more and 99 mol% or less of a constitutional unit derived from 4-methyl-1-pentene and 1 mol% or more and 40 mol% or less of a constitutional unit derived from an $\alpha$-olefin having 2 or more and 20 or less carbon atoms other than 4-methyl-1-pentene, in which the content ratio of the component (A) is 45 to 75 parts by mass, the content ratio of the component (B) is 5 to 20 parts by mass, and the content ratio of the component (C) is 15 to 45 parts by mass in a total of 100 parts by mass.

PRIOR ART DOCUMENT

PATENT DOCUMENTS

Patent Document 1: JP-B2-6484081
Patent Document 2: JP-B2-6621262
Patent Document 3: JP-A-2020-111731

SUMMARY OF THE INVENTION

PROBLEMS TO BE SOLVED BY THE INVENTION

However, according to the study of the present inventors, in the invention of Patent Document 2, it has been found that the easily adhesive layer is applied and formed in a solution state on the film serving as the substrate layer, and the heat-sealable layer is then formed by melt flow, and therefore an adhesion force between the respective layers is apt to be insufficient. In particular, it has been found that, when the substrate layer is the methylpentene polymer, an adhesion force between the substrate layer and the easily adhesive layer composed of the resin obtained by modifying the copolymer of propylene and 1-butene with maleic acid is insufficient.

The invention of Patent Document 3 does not mainly assume the heat-sealable laminated film, and the adhesive resin composition disclosed in Patent Document 3 does not have a sufficient adhesion force as the heat-sealable laminated film because an adhesion force required between the layers is low.

Therefore, an object of the present invention is to provide a heat-sealable laminated film which has a high adhesion force at a laminated interface and has a good bonded state when being heat-sealed, and a roll obtained by rolling the heat-sealable laminated film.

MEANS FOR SOLVING THE PROBLEMS

As a result of intensive studies to solve the above problems, the present inventors have found that the above problems can be solved by co-extruding a substrate layer containing a polymethylpentene resin and an easily adhesive layer (preferably a heat-sealable layer) containing a copolymer of 4-methyl-1-pentene and other $\alpha$-olefin, and have completed the present invention.

That is, the present invention includes the following contents.

[1] A heat-sealable laminated film including a layer B, a layer C, a layer A, a layer C, and a layer B in this order, at least the layer C, the layer A, and the layer C being laminated by co-extrusion, wherein the layer A contains 100 to 70% by mass of a polymer A1 containing 90 mol% or more and 100 mol% or less of a constitutional unit derived from 4-methyl-1-pentene with respect to all constitutional units, the layer B contains 100 to 70% by mass of a heat-sealable polyolefin B1, and the layer C contains 50% by mass or more of a copolymer C1 containing 60 mol% or more and 99 mol% or less of a constitutional unit derived from 4-methyl-1-pentene and 1 mol% or more and 40 mol% or less of a constitutional unit derived from an $\alpha$-olefin having 2 or more and 20 or less carbon atoms other than 4-methyl-1-pentene.

[2] The heat-sealable laminated film according to [1], wherein when a melting peak temperature measured by DSC for the heat-sealable polyolefin B1 (a median value between a minimum value and a maximum value when the heat-sealable polyolefin B1 has a plurality of melting peak temperatures) is taken as a melting point $T_{mB1}$, a film thickness deformation rate of the layer A when a load of 3 MPa is applied at a temperature of $T_{mB1}+30°C$ for 10 minutes is 5% or less.

[3] The heat-sealable laminated film according to [1] or [2], wherein the polymer A1 contains 100 mol% of the constitutional unit derived from 4-methyl-1-pentene with respect to all the constitutional units.

[4] The heat-sealable laminated film according to any one of [1[ to [3], wherein the layer A contains 100% by mass of the polymer A1.

[5] The heat-sealable laminated film according to any one of [1] to [4], wherein when a film thickness of the layer A is taken as tA, a film thickness of the layer B is taken as tB, and a film thickness of the layer C is taken as tC, the following formulas (1) and (2) are satisfied.

$$2 \leq tA/tB \leq 5 \quad (1)$$

$$1 \leq tB/tC \leq 100 \quad (2)$$

[6] The heat-sealable laminated film according to any one of [1] to [5], wherein the heat-sealable polyolefin B1 contains a modified product modified with an acid anhydride, has an acid anhydride content of 0.1 to 3% by mass, and has an extraction amount of a low molecular weight component having a number average molecular weight of 1000 or less with acetone of less than 1% by mass.

[7] A roll obtained by rolling the heat-sealable laminated film according to any one of [1] to [6] in a machine direction.

EFFECT OF THE INVENTION

According to the present invention, it is possible to provide a heat-sealable laminated film which has a high adhesion force at a laminated interface and has a good bonded state when being heat-sealed, and a roll obtained by rolling the heat-sealable laminated film.

Details of the reason are unknown, but it is considered as follows. When the layer A mainly composed of the polymer A1 mainly composed of a constitutional unit derived from 4-methyl-1-pentene is a film solidified once, the degree of crystallinity of the layer A tends to be high, and therefore the layer A has low surface energy, which makes it difficult to sufficiently wet the heat-sealable resin layer and to diffuse the heat-sealable layer B into the layer A, resulting in difficult adhesion.

However, when the layer A is in a molten state, the components of the layer A and the layer C using a material having high affinity in the layer B can be diffused with each other to form close contact. Therefore, by co-extruding at least the layer A and the layer C and laminating the layer A and the layer C in a molten state, a high adhesion force can be developed between the respective layers. Furthermore, the heat-sealable layer B exhibits a good adhesion force when being bonded to a metal or the like, and therefore the durability of the laminated film in the initial stage and under a moist-heat environment can be enhanced. Since the polymer A1 has a small amount of copolymerization components, the degree of crystallinity of the layer A can be increased, and therefore the mechanical properties of the layer A can be improved even in an un-stretched form. When the heat-sealable layer B is heat-sealed, the film thickness deformation rate of the layer A can be reduced. In addition, the layer A is not stretched, and therefore the in-plane thermal deformation rate of the layer A can also be reduced. As a result, the bonded state of the heat-sealable laminated film and an adherend becomes favorable.

MODE FOR CARRYING OUT THE INVENTION

Hereinafter, the present invention will be described in detail. For convenience of description, the formation direction of a film may be referred to as a mechanical axis direction, a vertical direction, a machine direction or an MD direction, and a direction perpendicular to the film formation direction and a thickness direction may be referred to as a transverse direction, a lateral direction, or a TD direction. Various physical properties and the like described in the present specification are specifically measured by methods described in Examples.

[Heat-sealable laminated film]

A heat-sealable laminated film of the present invention is a heat-sealable laminated film including a layer B, a layer C, a layer A, a layer C, and a layer B in this order, in which at least the layer C, the layer A, and the layer C are laminated by co-extrusion. That is, the heat-sealable laminated film may include the layer A which is a substrate layer, the layer C which is an easily adhesive layer, and the layer B which is a heat-sealable layer in the order of the layer B, layer C, layer A, layer C, and layer B.

For this reason, the heat-sealable laminated film may include other layers. For example, a protective film, a release film, or a cover film or the like may be provided on the surface side of the layer B, or an adherend may be thermally bonded to one surface in advance. Furthermore, an intermediate layer and an easily adhesive layer and the like having a composition different from that of the layer C may be included between the layer B and the layer C. As in the heat-sealable laminated film including the layer B, the layer C, the layer A, the layer C, the layer A, the layer C, and the layer B, a layer configuration repeatedly including the layer C and the layer A can also be adopted.

It is sufficient that at least the layer C, the layer A, and the layer C are directly laminated by co-extrusion, but it is preferable that the layer B, the layer C, the layer A, the layer C, and the layer B are directly laminated by co-extrusion from the viewpoint of simplifying a manufacturing process while enhancing an adhesion force between the layers.

The specification of "laminated by co-extrusion" in the present invention specifies the structure of an object by a producing method, but it is impossible or substantially impractical to directly specify the object by its structure or characteristics as follows.

It is apparent that adhesion at a laminated interface in the case of producing a three-layer laminated film by co-extrusion is different from that in the case of thermally laminating other two layers on a previously produced substrate film, and thus the three-layer laminated film has a microstructural difference. That is, when molecules at the laminated interfaces are microstructurally viewed, it is considered that different states where components of the layers are diffused and infiltrated from each other are present, and thus the laminated interfaces have different adhesions. However, since the difference between the diffusion states is a degree difference, it is difficult to structurally specify the difference between the states.

Therefore, it is not possible to find words specifying a structure or characteristics relating to a difference from the conventional technique, and it is also impossible or impractical to analyze and specify such a structure or characteristics on the basis of measurement. Therefore, in the present invention, it is impossible or substantially impractical to directly specify the object by its structure or characteristics at the time of filing.

Hereinafter, the configuration of the heat-sealable laminated film of the present invention will be described.

[Layer A (substrate layer)]

A thermoplastic resin contained in a resin composition constituting the layer A as the substrate layer can be selected according to characteristics required for the substrate layer in the intended application, but in order to have the durability of the substrate layer itself in a severe moist-heat environment, it is preferable that the thermoplastic resin does not have a functional group that serves as a reaction point of water molecules, and has a high melting point for withstanding heat during bonding and heat due to the environment.

In the present invention, from such a viewpoint, a polymer A1 containing 90 mol% or more and 100 mol% or less of a constitutional unit derived from 4-methyl-1-pentene with respect to all constitutional units is contained as a main component of the resin composition constituting the layer A.

The layer A may contain 100 to 70% by mass of the polymer A1, but from the viewpoint of reducing the film thickness deformation rate and in-plane thermal deformation rate of the layer A, the layer A preferably contains 100 to 80% by mass of the polymer A1, more preferably 100 to 90% by mass, and most preferably 100% by mass. When the content is within such a range, an effect of improving heat resistance by a 4-methyl-1-pentene-based polymer is easily obtained, and a hard film utilizing a high crystallization rate is easily obtained.

The layer A may contain 0 to 30% by mass of other resin A2, but for the same reason, the layer A preferably contains 0 to 20% by mass of the resin A2, and more preferably 0 to 10% by mass. It is most preferable that the other resin A2 is not contained in the layer A.

When the melting point of the substrate layer is taken as TmS and the melting point of a resin constituting a heat-sealable layer described later is taken as TmHS, and a difference therebetween is defined as $\Delta T$ (=TmS-TmHS), TmS and TmHS are combined so that $\Delta T$ is preferably in a range of 0 to 120°C, and more preferably 10 to 100°C. By setting $\Delta T$ to 0°C or higher, for example, the substrate layer can be prevented from being first melted by heat applied during bonding. By setting $\Delta T$ to 120°C or lower, it is possible to suppress the occurrence of lamination mottle to perform stable production without excessively increasing the difference in melt viscosity during melting by an extruder and laminating in the thickness direction. From such a viewpoint, $\Delta T$ is more preferably 20°C to 90°C, and particularly preferably 40°C to 80°C. The melting point TmS can also be regarded as the melting point $T_{mA1}$ of the polymer A1 which is the main component of the layer A.

In order to obtain strength required as the substrate layer in providing the heat-sealable layer, the thickness of the layer A may be 20 $\mu$m or more, and is preferably 25 $\mu$m or more, more preferably 35 $\mu$m or more, and still more preferably 45 $\mu$m or more. The thickness of the layer A is preferably 300 $\mu$m or less, more preferably 270 um or less, and still more preferably 250 um or less. In addition, the thickness of the layer A may be 150 $\mu$m or less or 130 um or less.

[Polymer A1]

The polymer A1 contains 90 mol% or more and 100 mol% or less of a constitutional unit derived from 4-methyl-1-pentene with respect to all constitutional units. The polymer A1 preferably contains 92 mol% or more and 100 mol% or less of the constitutional unit, and more preferably contains 95 mol% or more and 100 mol% or less of the constitutional unit.

The polymer A1 may further contain 0 mol% or more and 10 mol% or less of a constitutional unit derived from an $\alpha$-olefin other than 4-methyl-1-pentene with respect to all the constitutional units. The polymer A1 preferably contains 0 mol% or more and 8 mol% or less, and more preferably 0 mol% or more and 5 mol% or less of the constitutional unit.

That is, examples of the polymer A1 include, in addition to a homopolymer obtained by polymerizing 4-methyl-1-pentene as a monomer, a copolymer obtained by copolymerizing 90 mol% or more of 4-methyl-1-pentene as a monomer and 10 mol% or less of an $\alpha$-olefin other than 4-methyl-1-pentene as a monomer.

When the polymer A1 is the copolymer, the monomer to be copolymerized is preferably an $\alpha$-olefin having 2 or more and 20 or less carbon atoms. Examples of the $\alpha$-olefin to be copolymerized include one or more of ethylene, propylene, 1-butene, 1-hexene, 1-octene, 1-decene, 1-tetradecene, and 1-octadecene and the like.

The melting point $T_{mA1}$ of the polymer A1 is preferably 230 °C or higher. When a 4-methyl-1-pentene-based copolymer having a high copolymerization ratio of other monomer is used, the melting point decreases, but in this case, the crystallization rate decreases, and the rigidity of the substrate layer decreases, and therefore the film thickness deformation rate of the layer A during metal bonding at a temperature equal to or higher than the melting point of the heat-sealable layer described later increases. From such a viewpoint, $T_{mA1}$ is preferably 231°C or higher, more preferably 232°C or higher, and still more preferably 233°C or higher. The upper limit of $T_{mA1}$ is not limited, but is preferably 250°C or lower, and more preferably 245°C or lower because a methyl-1-pentene-based polymer or a 4-methyl-1-pentene-based copolymer having a lower copolymerization ratio is used, or the melting point $T_{mA1}$ can be increased by controlling tacticity.

In the case of the substrate layer using the polymer A1, TmS is improved as compared with general polypropylene, and therefore it is easy to secure ΔT. However, the substrate layer has low surface energy and a high crystallization rate, and therefore the substrate layer has low affinity with the heat-sealable layer, which makes it difficult to increase an adhesion force. Therefore, it is particularly effective to provide the layer C which is an easily adhesive layer by co-extrusion.

[Other resin A2]

The layer A may contain other resin A2 other than the polymer A1. The other resin A2 may have appropriate compatibility and dispersibility with the polymer A1. Examples thereof include polyolefins (including modified polyolefins), 4-methyl-1-pentene-based copolymers, and copolymers of 4-methyl-1-pentene and α-olefin, and polyolefins are preferred. The polyolefin is excellent in that it does not have a functional group that serves as a reaction point of water molecules, and the dispersibility of the resin A2 in the polymer A1 is improved by using the polyolefin.

Examples of the polyolefin resin include the following polyolefin resins or modified polyolefin resins. In the present specification, the term "modified" refers to one containing a constitutional unit different from a constitutional unit such as a polyolefin in the same molecule.

Examples of the polyolefin resin include polyolefin resins such as high density polyethylene, low density polyethylene, ultra-high molecular weight polyethylene, linear low density polyethylene, polypropylene, and poly(1-butene). Other examples thereof include a blend of these polyolefin-based resins or a copolymer containing these polyolefin-based resins as a constituent component. Among these polyolefin-based resins, polypropylene is particularly preferable.

In particular, the same polyolefin resin or modified polyolefin resin can be used when mixed with the 4-methyl-1-pentene-based polymer (polymer A1) by melt kneading, but it is preferable to use a polypropylene resin obtained by copolymerizing 4-methyl-1-pentene or a maleic acid-modified polypropylene resin from the viewpoint of compatibility and the like. As a modification method, graft modification or copolymerization can be used.

Specific examples of the modified polyolefin resin include maleic acid anhydride-modified polyethylene, maleic acid anhydride-modified polypropylene, an ethylene/acrylic acid copolymer, an ethylene/methacrylic acid copolymer, ones wherein a part of or all of the carboxylic acid moiety/moieties in the above copolymer is/are made into a salt with sodium, lithium, potassium, zinc or calcium, an ethylene/methyl acrylate copolymer, an ethylene/ethyl acrylate copolymer, an ethylene/methyl methacrylate copolymer, an ethylene/ethyl methacrylate copolymer, an ethylene/ethyl acrylate-g-maleic acid anhydride copolymer (here, "-g-" stands for graft; hereinafter, it stands for the same), an ethylene/methyl methacrylate-g-maleic acid anhydride copolymer, an ethylene/propylene-g-maleic acid anhydride copolymer, an ethylene/butene-1-g-maleic acid anhydride copolymer, an ethylene/propylene/1,4-hexadiene-g-maleic acid anhydride copolymer, an ethylene/propylene/dicyclopentadiene-g-maleic acid anhydride copolymer, an ethylene/propylene/2,5-norbornadiene-g-maleic acid anhydride copolymer, a hydrogenated styrene/butadiene/styrene-g-maleic acid anhydride copolymer, and a hydrogenated styrene/isoprene/styrene-g-maleic acid anhydride copolymer. Among them, maleic acid-modified polypropylene or an ethylene-propylene copolymer or the like is particularly preferable.

[Other optional components of layer A]

The layer A can contain an appropriate filler as necessary for the purpose of improving lubricity, and the like as long as the object of the present invention is not impaired. As the filler, those conventionally known as a lubricity imparting agent for a film or a sheet can be used. Examples thereof include calcium carbonate, calcium oxide, aluminum oxide, kaolin, silicon oxide, zinc oxide, carbon black, silicon carbide, tin oxide, crosslinked acrylic resin particles, crosslinked polystyrene resin particles, melamine resin particles, and crosslinked silicon resin particles. Furthermore, a coloring agent, an anti-static agent, an antioxidant, an organic lubricant, and a catalyst and the like can also be appropriately added to the layer A. In particular, in consideration of use in a moist-heat environment, an additive having low elutability can be preferably used.

Examples of the other optional components include various additives conventionally used for the 4-methyl-1-pentene-based polymer and the like. Examples of the additives include a stabilizer, an impact improver, a flame retardant, a release agent, a sliding improver, a coloring agent, a plasticizer, and a crystal nucleating agent.

The other optional component can be used in an amount of, for example, 0.001 to 10% by mass in the layer A.

[Layer B (heat-sealable layer)]

The layer B which is the heat-sealable layer contains 100 to 70% by mass of a heat-sealable polyolefin B1, and from the viewpoint of moist-heat durability and a bonding force to an adherend, the layer B preferably contains 100 to 75% by mass, more preferably 100 to 80% by mass, still more preferably 100 to 90% by mass, and most preferably 100% by mass of the heat-sealable polyolefin B1. In the present specification, the term "heat-sealable" refers to a property of being sealable to an adherend by heating, and preferably refers to a property of being sealable to SUS316 which is a metal by heating.

The layers B provided on both surfaces of the layer A may have the same composition or different compositions, but for example, when adherends made of the same material are thermally bonded to each other, it is preferable to provide the heat-sealable layers having the same composition on both the surfaces. The thicknesses of the heat-sealable layers may be the same or different from each other, but in the case as described above, it is preferable to provide the heat-sealable layers having the same thickness on both outermost surfaces.

The thickness of the layer B is preferably 100 μm or less. As for the adhesion between the heat-sealable layer provided by co-extrusion and each of the easily adhesive layer and the substrate layer described later, a strong adhesion force can be obtained, but for example, in the case of using an acid-modified polyolefin resin, an acid-modified portion has a functional group affected by moisture, and therefore when the thickness is unnecessarily increased, the heat-sealable layer tends to be brittle and broken in a severe moist-heat environment. From such a viewpoint, the thickness of the layer B is preferably 90 μm or less, more preferably 80 μm or less, still more preferably 75 μm or less, and particularly preferably 60 μm or less. Since a mechanical relaxation function in the thickness direction is weakened as the heat-sealable layer even if the heat-sealable layer is too thin, the thickness of the heat-sealable layer is preferably, for example, 10 μm or more, more preferably 15 μm or more, and particularly preferably 20 μm or more.

The layers B are provided on both the surfaces of the substrate layer by co-extrusion with an easily adhesive layer interposed therebetween, and therefore the states of the laminated interfaces of both the surfaces of the substrate layer can be the same. Such states are more preferable from the viewpoint of enhancing the adhesion of the laminated interfaces of both the surfaces.

[Heat-sealable polyolefin B1]

As a heat-sealable polyolefin B1, an unmodified polyolefin-based resin can be used, but a modified polyolefin is preferable, and a modified polyolefin containing polypropylene is particularly preferable.

Examples of the unmodified polyolefin-based resin include homopolymers and copolymers of an olefin having 2 to 8 carbon atoms, and copolymers of an olefin having 2 to 8 carbon atoms and other monomers. Specifically, for example, polyethylenes such as high density polyethylene (HDPE), low density polyethylene (LDPE), and a linear low density polyethylene resin, polypropylene, polyisobutylene, poly(1-butene), polyvinylcyclohexane, polystyrene, poly(p-methylstyrene), poly($\alpha$-methylstyrene), an ethylene-propylene block copolymer, an ethylene-propylene random copolymer, an ethylene-butene-1 copolymer, an ethylene-4-methyl-1-pentene copolymer, an ethylene-butene-propylene terpolymer, an ethylene-propylene diene rubber, an $\alpha$-olefin copolymer such as an ethylene-hexene copolymer, an ethylene-vinyl acetate copolymer, an ethylene-acrylic acid copolymer, an ethylene-methyl methacrylate copolymer, an ethylene-vinyl acetate-methyl methacrylate copolymer, a polybutadiene-styrene copolymer, a polybutadiene-maleic anhydride copolymer and an ionomer resin. Furthermore, chlorinated polyolefins obtained by chlorinating these polyolefins can also be used.

As described above, it is possible to use various types of heat-sealable polyolefin resins B1, and it is particularly preferable to use a modified polyolefin resin obtained by introducing various functional groups (for example, a carboxyl group and a hydroxyl group and the like) into a polyolefin resin.

Furthermore, among these modified polyolefin resins, a modified polyolefin resin having an acid value of 1 to 200 mgKOH/g (also referred to as an acid-modified polyolefin resin) and/or a modified polyolefin resin having a hydroxyl value of 1 to 200 mgKOH/g (also referred to as a hydroxyl group-modified polyolefin resin) can be used because adhesion to a metal layer is further improved and electrolyte resistance is excellent.

An acid-modified polyolefin resin is a polyolefin resin having a carboxyl group or a carboxylic anhydride group in the molecule, and is synthesized by modifying a polyolefin with an unsaturated carboxylic acid or a derivative thereof. As this modification method, graft modification or copolymerization can be used.

The acid-modified polyolefin resin is a graft-modified polyolefin obtained by graft-modifying or copolymerizing at least one polymerizable ethylenically unsaturated carboxylic acid or a derivative thereof with a pre-modification polyolefin resin.

Examples of the pre-modification polyolefin resin include the above-mentioned polyolefin resins, and among them, a homopolymer of propylene, a copolymer of propylene and $\alpha$-olefin, a homopolymer of ethylene, and a copolymer of ethylene and $\alpha$-olefin, and the like are preferable. These can be used alone or in combination of two or more.

Examples of the acid-modified polyolefin resin include maleic anhydride-modified polypropylene, an ethylene-(meth)acrylic acid copolymer, an ethylene-acrylic acid ester-maleic anhydride terpolymer, or an ethylene-methacrylic acid ester-maleic anhydride terpolymer. Specifically, the acid-modified polyolefin resin is commercially available as "MODIC" manufactured by Mitsubishi Chemical Corporation, "ADMER" and "UNISTOLE" manufactured by Mitsui Chemicals, Inc., "HARDLEN" manufactured by Toyobo Co., Ltd., "UMEX" manufactured by Sanyo Chemical, Ltd., "REXPEARL EEA" and "REXPEARL ET" manufactured by Japan Polyethylene Corporation, "PRIMACOL" manufactured by Dow Chemical, "NUCLEL" manufactured by Du Pont Mitsui Polychemicals Co., Ltd., and "BONDINE" manufactured by Arkema.

A hydroxyl group-modified polyolefin resin is a polyolefin resin having a hydroxyl group in the molecule, and is synthesized by graft-modifying or copolymerizing a polyolefin with a hydroxyl group-containing (meth)acrylic acid ester or a hydroxyl group-containing vinyl ether described later. Examples of the hydroxyl group-containing (meth)acrylic acid ester include hydroxyethyl (meth)acrylate; hydroxypropyl (meth)acrylate, glycerol (meth)acrylate; lactone-modified hydroxyethyl (meth)acrylate, polyethylene glycol (meth)acrylate, and polypropylene glycol (meth)acrylate, and examples of the hydroxyl group-containing vinyl ether include 2-hydroxyethyl vinyl ether, diethylene glycol monovinyl ether, and 4-hydroxybutyl vinyl ether.

A particularly preferable heat-sealable polyolefin resin is a polyolefin in which the heat-sealable polyolefin B1 contains a modified product modified with an acid anhydride, has an acid anhydride content of 0.1 to 3% by mass, and has an extraction amount of a low molecular weight component having a number average molecular weight of 1000 or less with acetone of less than 1% by mass.

When the anhydride content is 0.1% by mass or more, sufficient adhesion to a metal is easily obtained, and when the anhydride content is 3% by mass or less, sufficient mechanical properties such as rigidity and strength are easily obtained. When the extraction amount of the low molecular weight component is less than 1% by mass, the low molecular weight component is less likely to bleed out to the surface of the heat-sealable layer, and therefore the adhesion is less likely to be inhibited.

[Other resin B2]

The layer B may contain 0 to 30% by mass of other resin B2 other than the heat-sealable polyolefin B1. That is, the heat-sealable layer can contain the other resin B2 having appropriate compatibility or dispersibility with the heat-sealable polyolefin B1 as long as the object of the present invention is not impaired.

However, when the amount of the other resin B2 is too large, the original adhesion force at the time of bonding a metal may be reduced. The layer C which is an easily adhesive layer is provided, to provide an effect of reducing the amount of the other resin component added in the layer B. From such a viewpoint, the upper limit of the amount of the resin B2 contained in the heat-sealable layer is 30% by mass, preferably 25% by mass, more preferably 20% by mass, and particularly preferably 10% by mass. The lower limit of the amount of the resin B2 is not particularly specified, but may be 0% by mass as long as the adhesion force according to the intended use can be secured.

Examples of the resin B2 include polyamide, polyester, polyurethane, a 4-methyl-1-pentene-based polymer (polymer A1), a copolymer C1 (copolymer of 4-methyl-1-pentene and $\alpha$-olefin) described later, polyolefins other than the polymer A1 and the copolymer C1, an ethylene propylene diene rubber, a fluororubber, and a silicone rubber.

The layer B can be composed of only a resin, but a stabilizer such as a tackifier, an anti-static agent, an antioxidant, a metal deactivator, a dehydrating agent, or an antacid adsorbent, or an additive such as a crosslinking agent, a chain transfer agent, a nucleating agent, a lubricant, a plasticizer, a filler, a reinforcing material, a pigment, a dye, or a flame retardant may be added to the layer B as long as the effect of the present invention is not impaired.

[Layer C (easily adhesive layer)]

The layer C which is an easily adhesive layer contains a copolymer C1 containing 60 mol% or more and 99 mol% or less of a constitutional unit derived from 4-methyl-1-pentene and 1 mol% or more and 40 mol% or less of a constitutional unit derived from an $\alpha$-olefin having 2 or more and 20 or less carbon atoms other than 4-methyl-1-pentene.

The layer C may contain 100 to 50% by mass of the copolymer C1, but from the viewpoint of enhancing the adhesion force to the layer A and the layer B, the layer C preferably contains 100 to 80% by mass of the copolymer C1, more preferably 100 to 90% by mass, and most preferably 100% by mass.

The layer C may contain 0 to 50% by mass of other resin C2, but from the viewpoint of enhancing the adhesion force to the layer A and the layer B, the layer C preferably contains 0 to 20% by mass of the resin C2, and more preferably 0 to 10% by mass. It is most preferable that the other resin C2 is not contained in the layer C.

The layer C preferably does not contain components other than the resin component, but may contain an antioxidant, a stabilizer, a crosslinking agent, a lubricant, a metal deactivator, and a nucleating agent and the like as long as the effect of the layer C is not impaired.

The layers C provided on both surfaces of the layer A may have the same composition or different compositions, but for example, when heat-sealable layers made of the same material and having the same thickness are provided on both surfaces, it is preferable to provide the layers C having the same composition on both the surfaces. The thicknesses of the layers C may be the same or different from each other, but in the case as described above, it is preferable to provide the layers C having the same thickness on both the surfaces.

The thickness of the layer C is preferably 0.5 $\mu$m or more, more preferably 1 $\mu$m or more, and still more preferably 2 um or more, and is preferably 15 $\mu$m or less, more preferably 12 $\mu$m or less, and still more preferably 10 um or less, in order to obtain an appropriate thickness ratio with respect to the layer B.

[Copolymer C1]

The copolymer C1 may be the same as or different from the polymer A1, but from the viewpoint of enhancing the adhesion force to the layer A and the layer B, the mole percent of the constitutional unit derived from 4-methyl-1-pentene constituting the copolymer C1 is preferably lower, more preferably lower by 10 mol% or more, and still more preferably lower by 20 mol% or more than that of the polymer A1.

Examples of the $\alpha$-olefin having 2 or more and 20 or less carbon atoms as the constituent component of the copolymer C1 include ethylene, propylene, 1-butene, 1-hexene, 1-octene, 1-decene, 1-tetradecene, and 1-octadecene. The $\alpha$-olefin is preferably ethylene, propylene, 1-butene, 1-hexene, 1-octene, or 1-decene, more preferably ethylene, propylene, 1-butene, 1-hexene, or 1-octene, and still more preferably ethylene, propylene, 1-butene, or 1-hexene. The $\alpha$-olefins may be used alone or in combination of two or more thereof.

In the copolymer C1, the amount of the constitutional unit derived from 4-methyl-1-pentene is 60 mol% or more and 99 mol% or less, preferably 63 mol% or more and 98 mol% or less, more preferably 65 mol% or more and 95 mol% or less, still more preferably 65 mol% or more and 90 mol% or less, and particularly preferably 65 mol% or more and 87 mol% or less. The amount of the constitutional unit derived from the $\alpha$-olefin having 2 or more and 20 or less carbon atoms other than 4-methyl-1-pentene is 1 mol% or more and 40 mol% or less, preferably 2 mol% or more and 37 mol% or less, more preferably 5 mol% or more and 35 mol% or less, still more preferably 10 mol% or more and 35 mol% or less, and particularly preferably 13 mol% or more and 35 mol% or less. When the amount of the constitutional unit is within the above range, the layer C has a more excellent adhesion force to the layer A and the layer B.

The copolymer C1 may be an amorphous copolymer having no melting point, but a melting point $T_{mC1}$ which is a melting peak temperature measured by a differential scanning calorimeter (DSC) is preferably 199°C or lower, more preferably 100 to 160°C, and still more preferably 110 to 150°C.

As the copolymer C1, it is particularly preferable to use ABSORTOMERS EP1013 and EP1001 manufactured by Mitsui Chemicals, Inc., and the like.

[Other resin C2]

Examples of the other resin C2 of the copolymer C1 include a 4-methyl-1-pentene-based resin, a polyolefin resin, and a polyethylene resin in addition to the polymer A1 and the heat-sealable polyolefin B1.

[Characteristics of heat-sealable laminated film]

In the heat-sealable laminated film of the present invention, it is preferable that, when a melting peak temperature measured by DSC for the heat-sealable polyolefin B1 (a median value between a minimum value and a maximum value when the heat-sealable polyolefin B1 has a plurality of melting peak temperatures) is taken as a melting point $T_{mB1}$, the film thickness deformation rate of the layer A when a load of 3 MPa is applied at a temperature of $T_{mB1}$+30°C for 10 minutes is 5% or less. When the film thickness deformation rate is 5% or less, the amount of change in dimension in a thickness direction is small due to bonding during thermal bonding, and the volume of shrinkage in the film thickness direction is less likely act in a direction of expanding the inside of the plane, and therefore the change in dimension in the plane tends to be also small. From such a viewpoint, the film thickness deformation rate of the layer A is preferably 3% or less, and more preferably 2% or less. The film thickness deformation rate is preferably as small as possible. The lower limit of the film thickness deformation rate is most preferably 0%, but 1% or more is still usable.

As described above, the volume change of the shrinkage in the film thickness direction acts in the direction of expanding the inside of the plane. However, from the method for producing a heat-sealable laminated film, a film solidified in a state of having a residual stress in the in-plane direction is generally formed, and therefore a shrinkage behavior is generally caused in the in-plane direction. Therefore, the heat-sealable laminated film preferably has an in-plane deformation rate of 4% or less at a temperature of the melting point $T_{mB1}$+30°C. From such a viewpoint, the in-plane deformation rate is more preferably 3% or less, and particularly preferably 2% or less. The in-plane deformation rate is preferably as small as possible. The lower limit value of the in-plane deformation rate is most preferably 0%, but 1% or more is still usable.

In the heat-sealable laminated film of the present invention, it is preferable that, when the film thickness of the layer A is taken as tA, the film thickness of the layer B is taken as tB, and the film thickness of the layer C is taken as tC, the following formula (1) and the following formula (2) are satisfied as the ratios of the thicknesses of the layers.

$$2 \leq tA/tB \leq 5 \quad (1)$$

$$1 \leq tB/tC \leq 100 \quad (2)$$

When tA/tB is 5 or less, the total thickness does not become too large, and the sheet is easily cooled during co-extrusion film formation described later, and is easily wound into a roll. When tA/tB is 2 or more, and the heat-sealable layer is melted and bonded to other member, heat is less likely to reach the substrate layer, and the substrate layer is less likely to be affected during bonding. From such a viewpoint, the upper limit of tA/tB is preferably 4.5 or less, more preferably 4.0 or less, and particularly preferably 3.5 or less. The lower limit of tA/tB is preferably 2.2 or more, more preferably 2.4 or more, and particularly preferably 2.5 or more.

When tB/tC is 100 or less, that is, when the easily adhesive layer is not extremely thin as compared with the heat-sealable layer, the easily adhesive layer is sufficiently diffused into the substrate layer and the heat-sealable layer, and therefore the adhesion force is easily increased. By making the thickness of the layer C equal to or less than that of the heat-sealable layer, it is not necessary to make the layer C unnecessarily thick. From such a viewpoint, the upper limit of tB/tC is preferably 80 or less, more preferably 60 or less, and particularly preferably 50 or less. The lower limit of tB/tC is preferably 2 or more, more preferably 3 or more, and particularly preferably 5 or more.

[Method for producing heat-sealable laminated film]

Hereinafter, a case where a 4-methyl-1-pentene-based polymer (polymer A1) having a melting point TmA1 of 230°C or higher is used as a main component of a resin constituting a layer A as a substrate layer will be described in detail as an example.

The heat-sealable laminated film of the present invention can be produced by, for example, kneading of materials constituting layers, co-extrusion of the kneaded product, molding of an un-stretched laminated body, and a heat treatment thereof as necessary, and the like.

A method for mixing and kneading the 4-methyl-1-pentene-based polymer (polymer A1), the resin composed of other polyolefin (other resin A2), and other optional components is not particularly limited, and for example, a single screw extruder, a twin screw extruder, a pressure kneader, and a Banbury mixer and the like can be used. Among these, a twin screw extruder is particularly preferably used. The operating conditions and the like of the twin screw extruder are different depending on various factors such as the type of the resin containing the polymer A1 and the type and amount of each contained component, and cannot be uniquely determined. For example, the operating temperature may be set to around +40°C with respect to the melting point. In the screw configuration of the extruder, kneading discs having excellent kneading are preferably incorporated at several positions.

The resin composition constituting the substrate layer can be melt-extruded into a sheet by co-extrusion together with the heat-sealable layer and the easily adhesive layer, and solidified by cooling with a casting drum or the like to obtain a heat-sealable laminated film.

A cooling temperature may be a temperature at which all the layers are sufficiently solidified, but is preferably 20 to 120°C, and more preferably 30 to 100°C, from the viewpoint that excessive cooling causes sheet-like resin floating or the like, which makes efficient cooling difficult.

A heat treatment is performed at $T_{mA1}$-100 to $T_{mA1}$-5°C for 1 to 60 seconds after solidification by cooling as necessary, and therefore the in-plane deformation rate of the heat-sealable laminated film is easily controlled within a predetermined range. As a method for the heat treatment, a roll conveyance type or a floating type may be used, but a floating type is preferable from the viewpoint of allowing relaxation in the in-plane direction and preventing the sticking of the heat-sealable layers on both the surfaces.

The heat-sealable laminated film of the present invention is characterized in that at least the easily adhesive layer is formed by co-extrusion together with the substrate layer, and the easily adhesive layer and the heat-sealable layer are preferably formed by co-extrusion together with the substrate layer. In the conventional method, the easily adhesive layer may be formed by a method other than the co-extrusion, and in that case, the adhesion force between the easily adhesive layer and the substrate layer becomes insufficient.

When the heat-sealable layer is subsequently laminated, examples of a lamination method include a dry lamination method and a wet lamination method, and examples of a coating method include an extrusion resin coating method, a molten resin coating method, and a coating liquid coating method. However, in these methods, it is necessary to laminate the heat-sealable layer in accordance with the substrate layer having a specific width in the transverse direction. Therefore, it is necessary to provide the heat-sealable layer in a separate step after producing the substrate layer once, and furthermore, due to width restriction, there are many restrictions on an area that can be produced per unit time. Therefore, even in consideration of the production process, it is preferable to form the easily adhesive layer and the heat-sealable layer by co-extrusion together with the substrate layer.

In the present invention, when the resin is extruded by co-extrusion in order to provide the heat-sealable layer, it is preferable to melt and extrude the resin by appropriately adjusting the melting temperature in accordance with the viscosity of the substrate layer. It is preferable to select the type and molecular weight of the heat-sealable polyolefin B1, and the other resin B2 so that the melt viscosity of the heat-sealable layer becomes appropriate.

Even when the resin is extruded by co-extrusion in order to provide the easily adhesive layer, it is preferable to melt and extrude the resin by appropriately adjusting the melting temperature in accordance with the viscosity of the substrate layer. It is preferable to select the type and molecular weight of the copolymer C1 and the other resin C2 so that the melt viscosity of the easily adhesive layer becomes appropriate.

The operating temperature (melting temperature) of the extruder for the heat-sealable layer is preferably $T_{mB1}+20°C$ to $T_{mB1}+120°C$, and more preferably $T_{mB1}+50°C$ to $T_{mB1}+100°C$, with respect to the melting point $T_{mB1}$ of the heat-sealable polyolefin B1.

The operating temperature (melting temperature) of the extruder for the easily adhesive layer is preferably $T_{mC1}+20°C$ to $T_{mC1}+120°C$, and more preferably $T_{mC1}+50°C$ to $T_{mC1}+100°C$, with respect to the melting point $T_{mC1}$ of the copolymer C1.

The discharge amount of the melt of the heat-sealable layer and the easily adhesive layer from the extruder is appropriately determined according to the thickness ratio with respect to the substrate layer, the thickness of the laminated body, and the line speed and the like.

[Roll]

A roll of the present invention is obtained by winding the heat-sealable laminated film as described above in the machine direction. That is, preferably, the heat-sealable laminated film of the present invention is continuously produced.

[Application]

The heat-sealable laminated film of the present invention can be used for thermally bonding various adherends. Examples of the adherend include various metals, various resins, fiber-reinforced resins including glass fibers and the like, and ceramics. Examples of the shape of the adherend include a sheet, a film, a flat plate, and a three-dimensional shape having a flat portion and a curved surface portion obtained by bending a flat surface.

Thermal bonding due to the heat-sealable laminated film is performed at a temperature equal to or higher than a temperature at which the heat-sealable layer is softened. In the case of thermal bonding at a temperature at which the substrate layer is thermally deformed, the film can be thermally bonded to an adherend having a more complicated surface shape.

EXAMPLES

The present invention will be more specifically described by reference to Examples and Comparative Examples. In the present invention, physical properties and the like were measured or evaluated by the following methods. Hereinafter, unless otherwise specified, "part" means "part by mass", and "%" means "% by mass".

(1) Film, thickness of each layer, layer thickness constituent ratio

A film was cut at a low temperature using an ice-embedded microtome to obtain a cross section perpendicular to the surface of the film. The cross section of the film was observed with a stereomicroscope, and a photograph was taken at an appropriate magnification at which the total thickness of the film was one field of view. From this image, the thickness of each layer was measured using a scale. Three cross-section samples prepared independently were measured, and the average value thereof was taken as the layer thickness of a laminated film. Layer thickness constituent ratios tA/tB and tB/tC were calculated with the layer thickness.

(2-1) Melting point

10 mg of a resin sample was collected, and subjected to DSC measurement at a temperature rising rate of 10°C/min using a DSC apparatus (Q100 manufactured by TA Instruments). From the obtained chart, the peak top of an endothermic peak was defined as a melting point, and calculated.

(2-2) Melting point $T_{mB1}$ of heat-sealable polyolefin B1

A melting peak temperature measured by DSC for a heat-sealable polyolefin B1 in the same manner as in the above (2-1) was taken as a melting point $T_{mB1}$. However, when the heat-sealable polyolefin B1 had a plurality of melting peak temperatures, a median value between a minimum value and a maximum value was taken as the melting point.

(3) Film thickness deformation rate of layer A

The obtained heat-sealable laminated film was cut into a size of 10 mm × 10 mm, and 30 laminated films were installed in a laminated state in a compression creep tester (CP6-L-250 manufactured by A & D Co., Ltd.). A load application treatment was performed in a film thickness direction for 10 minutes under the conditions of 3 MPa and 160°C (melting point $T_{mB1}$ (130°C) + 30°C). At this time, after completion of conditioning to environmental conditions, a time for finally loading a weight equivalent to 3 MPa was set to 0 minute, and measurement was performed for 10 minutes. The thickness of a layer A of the sample on which the load application treatment has been completed was measured by the method described in (1) above, and an amount of displacement from an initial film thickness was calculated. The film thickness deformation rate of the layer A was calculated using the following formula.

Film thickness deformation rate (%) = (initial film thickness - film thickness after treatment)/initial film thickness × 100

(4) In-plane deformation rate

A sample was sampled in a size of 200 mm × 200 mm in parallel to a machine direction (MD) and a transverse direction (TD) to prepare gauge marks (distance between gauge marks: 100 mm) in the machine direction (MD) and the transverse direction (TD). Thereafter, a treatment was performed for 30 seconds in a thermostatic bath at 160°C (melting point $T_{mB1}$ (130°C) + 30°C) in a state where no tension was applied. The distance between gauge marks was measured, and thermal deformation rates (%) at 160°C in the machine direction (MD) and the transverse direction (TD) were calculated from a change in the distance between gauge marks based on the distance between gauge marks before a heat treatment.

(5) Adhesion

(5-1) Initial adhesion

Adhesion was evaluated using SUS316 as an adherend. For the production of a sample piece, the obtained heat-sealable laminated film was sandwiched between two sheets of SUS316 having a thickness of 0.1 mm and cut into a size of 150 mm × 150 mm with a press machine, followed by pressing at 160°C and a pressure of 5 MPa for 1 minute to perform bonding. The molded sample was cut to a width of 10 mm and a length of 100 mm to obtain a sample piece. From this sample piece, an end portion of an adherend SUS316 of which adhesion was measured was held, and 180° peeling was performed at a peeling rate of 100 mm/min according to JIS-C2151 using a tensile tester (Tensilon UCT-100 manufactured by Orientec Co., Ltd.). Five measurements were performed, and the average value of the maximum values of the respective measurements was evaluated as a peel force according to the following criteria.
A: The peeling force is 10 N or more.
B: The peeling force is 3 N or more and less than 10 N.
C: The peeling force is less than 3 N.

In the case of the evaluation results of B and C, peeling occurred between the layer A and a layer C in visual confirmation.

(5-2) Durable adhesion under moist-heat environment (121°C × 48 hours)

The same procedures as in the above (5-1) were carried out except that the SUS316 adherend sample piece (width: 10 mm, length: 100 mm) prepared in the above (5-1) was immersed in water at 121°C for 48 hours, then left at room temperature for 24 hours, and dried, and evaluation was performed according to the following criteria.
A: The peeling force is 10 N or more.
B: The peeling force is 3 N or more and less than 10 N.
C: The peeling force is less than 3 N.

In the case of the evaluation results of B and C, peeling occurred between the layer A and a layer C in visual confirmation.

(6) Extraction amount of low molecular weight component

Using acetone evaporated and cooled in a warm water bath at 90°C, Soxhlet extraction was performed for 2 hours to extract a dissolved component, and using the obtained solution, a low molecular weight component having a number average molecular weight of 1000 or less was confirmed by an apparatus (e2695 manufactured by Waters). The extracted amount (% by mass) of the low molecular weight component was determined from the mass of the sample.

[Production Example 1]

A homopolymer PMP of 4-methyl-1-pentene (melting point: 242°C) was produced as follows.
Into a polymerization container having an internal volume of 1 L and sufficiently purged with nitrogen, 400 ml of 4-methyl-1 pentene, 300 ml of hydrogen, 0.5 mmol of triethylaluminum, and 1.0 mmol of titanium (III) chloride were added and charged, and the inside of the polymerization container was maintained at 60°C. After polymerization for 1 hour, the powder was taken out from the polymerization container, filtered, then washed with hexane, and dried overnight at 80°C under reduced pressure to obtain a polymer having a yield of 113.9 g.

[Example 1]

As a polymer A1 for forming a layer A as a substrate layer, a polymer containing 100% by mass of polymethylpentene (TPX) (DX845 manufactured by Mitsui Chemicals, Inc., 4-methyl-1-pentene copolymer obtained by copolymerizing several mol% of an $\alpha$-olefin having 10 carbon atoms, melting point: 233°C) was used, charged into an extruder, and melt-kneaded at a melting temperature of 280°C. A heat-sealable polyolefin containing 100% by mass of a modified polyolefin resin (HARDLEN M100 manufactured by Toyobo Co., Ltd., melting peak temperatures: 110°C, 130°C, and 150°C, melting point $T_{mB1}$: 130 °C, acid anhydride content: 1% by mass, extraction amount of low molecular weight component: 0.3% by mass) was used as a heat-sealable polyolefin B1 for forming a layer B which was a heat-sealable layer, charged into an extruder, and melt-kneaded at a melting temperature of 230°C. Furthermore, a copolymer containing 100% by mass of a 4-methyl-1-pentene-based copolymer (EP1013 manufactured by Mitsui Chemicals, Inc., 4-methyl-1-pentene: 85 mol%, $\alpha$-olefin having 10 carbon atoms: 15 mol%,) was used as a copolymer C1 for forming a layer C which was an easily adhesive layer, charged into an extruder, and melt-kneaded at a melting temperature of 200°C.
Each die slit was disposed so as to provide a layer configuration of layer B/layer C/layer A/layer C/layer B, and co-extrusion was performed so that the layers were in direct contact with each other. Solidification was performed by cooling on a casting drum set at a surface temperature of 60°C to prepare an un-stretched film. At this time, co-extrusion was performed with the discharge amount controlled so that the thickness constituent ratio of the un-stretched film was 30/5/75/5/30.
The un-stretched film was wound into a roll to obtain a roll of a heat-sealable laminated film. The characteristics of the obtained heat-sealable laminated film were summarized in Table 1.

[Example 2]

A roll of a heat-sealable laminated film was obtained in the same manner as in Example 1 except that a resin containing 90% by mass of a modified polyolefin resin (HARDLEN M100 manufactured by Toyobo Co., Ltd.) as a heat-sealable polyolefin B1 for forming a layer B and 10% by mass of a 4-methyl-1-pentene-based copolymer (EP1013 manufactured by Mitsui Chemicals, Inc.) as other resin B2 in Example 1 was used. The characteristics of the obtained heat-sealable laminated film were summarized in Table 1.

[Example 3]

A roll of a heat-sealable laminated film was obtained in the same manner as in Example 1 except that the heat-sealable laminated film having a thickness of 160 $\mu$m was obtained by changing the discharge amounts of layers B, C, A, C, and B in Example 1. The characteristics of the obtained heat-sealable laminated film were summarized in Table 1.

[Example 4]

A roll of a heat-sealable laminated film was obtained in the same manner as in Example 1 except that a polymer containing 90% by mass of polymethylpentene (DX845 manufactured by Mitsui Chemicals, Inc.) as a polymer A1 for forming a layer A and 10% by mass of a polypropylene resin (FS2011DG3 manufactured by Sumitomo Chemical Co., Ltd.) as other resin A2 in Example 1 was used. The characteristics of the obtained heat-sealable laminated film were summarized in Table 1.

[Example 5]

A roll of a heat-sealable laminated film was obtained in the same manner as in Example 1 except that a polymer containing 100% by mass of a homopolymer of polymethylpentene PMP (melting point: 242°C) obtained in Production Example 1 was used as a polymer A1 for forming a layer A in Example 1. The characteristics of the obtained heat-sealable laminated film were summarized in Table 1.

[Example 6]

A roll of a heat-sealable laminated film was obtained in the same manner as in Example 5 except that a copolymer containing 90% by mass of a 4-methyl-1-pentene-based copolymer (EP1013 manufactured by Mitsui Chemicals, Inc.) as a copolymer C1 for forming a layer C and 10% by mass of a modified polyolefin resin (HARDLEN M100 manufactured by Toyobo Co., Ltd.) as other resin C2 in Example 5 was used. The characteristics of the obtained heat-sealable laminated film were summarized in Table 1.

[Example 7]

A roll of a heat-sealable laminated film was obtained in the same manner as in Example 1 except that the heat-sealable laminated film having a thickness of 298 $\mu$m was obtained by changing the discharge amounts of layers B, C, A, C, and B in Example 1. The characteristics of the obtained heat-sealable laminated film were summarized in Table 1.

[Example 8]

A roll of a heat-sealable laminated film was obtained in the same manner as in Example 1 except that a copolymer containing 100% by mass of a 4-methyl-1-pentene-based copolymer (EP1001 manufactured by Mitsui Chemicals, Inc., 4-methyl-1-pentene: 72 mol%, $\alpha$-olefin: 28 mol%, melting point: none) was used as a copolymer C1 for forming a layer C, and a resin containing 90% by mass of a modified polyolefin resin (HARDLEN M100 manufactured by Toyobo Co., Ltd.) as a heat-sealable polyolefin B1 for forming a layer B, and 10% by mass of a 4-methyl-1-pentene-based copolymer (EP1001 manufactured by Mitsui Chemicals, Inc.) as other resin B2 in Example 1 was used. The characteristics of the obtained heat-sealable laminated film were summarized in Table 1.

[Example 9]

A roll of a laminated film of layers C, A, and C was obtained in the same manner as in Example 1 except that the laminated film having a thickness of 85 um and composed of the three layers C, A, and C was obtained without providing a layer B in Example 1. A roll of a heat-sealable layer film was obtained in the same manner as in Example 1 except that a heat-sealable layer film having a thickness of 30 um and composed of a layer B which was a heat-sealable layer was obtained without providing a layer A and a layer C in Example 1.
The roll of the laminated film was unwound, and the roll of the heat-sealable layer film was unwound so that the layer B was bonded to each of both surfaces thereof. A heating roll around which a Teflon tube was wound was set to 180°C, and lamination was performed while nipping to prepare a roll of a heat-sealable laminated film composed of the layer B, the layer C, the layer A, the layer C, and the layer B. The characteristics of the heat-sealable laminated film obtained by this method were summarized in Table 1.

[Comparative Example 1]

A roll of a heat-sealable laminated film was obtained in the same manner as in Example 1 except that a polymer containing 30% by mass of polymethylpentene (DX845 manufactured by Mitsui Chemicals, Inc.) as a polymer A1 for forming a layer A and 70% by mass of a polypropylene resin (FS2011DG3 manufactured by Sumitomo Chemical Co., Ltd.) as other resin A2 in Example 1 was used. The characteristics of the obtained heat-sealable laminated film were summarized in Table 1. Since the film thickness deformation of the layer A was extremely large, the film thickness deformation rate could not be measured.

[Comparative Example 2]

A roll of a heat-sealable laminated film was obtained in the same manner as in Example 1 except that the heat-sealable laminated film having a thickness of 165 um was obtained by changing the discharge amounts of layers B, A, and B without providing a layer C in Example 1. The characteristics of the obtained heat-sealable laminated film were summarized in Table 1. When durable adhesion under a moist-heat environment was measured, peeling occurred between the layer B and a layer A, and therefore the durable adhesion could not be measured.

[Comparative Example 3]

A roll of a heat-sealable laminated film was obtained in the same manner as in Example 1 except that a copolymer C1 for forming a layer C which was an easily adhesive layer was not used, and a resin containing 100% by mass of a polypropylene resin (FS2011DG3 manufactured by Sumitomo Chemical Co., Ltd.) as other resin C2 in Example 1 was used. The characteristics of the obtained heat-sealable laminated film were summarized in Table 1. When durable adhesion under a moist-heat environment was measured, peeling occurred between the layer C and a layer A, and therefore the durable adhesion could not be measured.

[Comparative Example 4]

A roll of a laminated film of layers B and C was obtained in the same manner as in Example 1 except that a laminated film having a thickness of 35 um and composed of the two layers B and C was obtained without providing a layer A in Example 1. A roll of a substrate layer film was obtained in the same manner as in Example 1 except that the substrate layer film having a thickness of 75 $\mu$m and composed of the layer A which was a substrate layer was obtained without providing the layers B and C in Example 1.

The roll of the substrate layer film was unwound, and the roll of the laminated film was unwound so that the layer C was bonded to each of both surfaces thereof. A heating roll around which a Teflon tube was wound was set to 180°C, and lamination was performed while nipping to prepare a roll of a heat-sealable laminated film composed of the layer B, the layer C, the layer A, the layer C, and the layer B. The characteristics of the heat-sealable laminated film obtained by this method were summarized in Table 1. Peeling occurred between the layer C and the layer A, and therefore initial adhesion and durable adhesion could not be measured.

[Table 1]

| Heat-sealable laminated film | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|
| Heat-sealable layer [layer B] | Resin type B1 | M100 | M100 | M100 | M100 | M100 | M100 | M100 | M100 | M100 | M100 | M100 | M100 | M100 |
| | Resin type B2 | - | EP1013 | - | - | - | - | - | EP1001 | - | - | - | - | - |
| | % by mass (B1/B2) | 100/0 | 90/10 | 100/0 | 100/0 | 100/0 | 100/0 | 100/0 | 90/10 | 100/0 | 100/0 | 100/0 | 100/0 | 100/0 |
| | Melting point TmB1 (°C) | 130 | 130 | 130 | 130 | 130 | 130 | 130 | 130 | 130 | 130 | 130 | 130 | 130 |
| | Extraction amount of low molecular weight component (% by mass) | 0.3 | 0.4 | 0.3 | 0.3 | 0.3 | 0.3 | 0.3 | 0.4 | 0.3 | 0.3 | 0.3 | 0.3 | 0.3 |
| Easily adhesive layer [layer C] | Resin type C1 | EP1013 | EP1013 | EP1013 | EP1013 | EP1013 | EP1013 | EP1013 | EP1001 | EP1013 | EP1013 | - | - | EP1013 |
| | Resin type C2 | - | - | - | - | - | M100 | - | - | - | - | - | FS2011DG3 | - |
| | % by mass (C1/C2) | 100/0 | 100/0 | 100/0 | 100/0 | 100/0 | 90/10 | 100/0 | 100/0 | 100/0 | 100/0 | - | 0/100 | 100/0 |
| | Melting point TmC1 (°C) | 130 | 130 | 130 | 130 | 130 | 130 | 130 | Absence | 130 | 130 | - | - | 130 |

EP 4 371 769 A1

16

(continued)

| Heat-sealable laminated film | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|
| Substrate layer [layer A] | Resin type A1 | DX845 | DX845 | DX845 | DX845 | PMP | PMP | DX845 | DX845 | DX845 | DX845 | DX845 | DX845 | DX845 |
| | Resin type A2 | - | - | - | FS2011DG3 | - | - | - | - | - | FS2011DG3 | - | - | - |
| | % by mass (A1/A2) | 100/0 | 100/0 | 100/0 | 90/10 | 100/0 | 100/0 | 100/0 | 100/0 | 100/0 | 30/70 | 100/0 | 100/0 | 100/0 |
| | Melting point TmA1 (°C) | 233 | 233 | 233 | 233 | 242 | 242 | 233 | 233 | 233 | 233 | 233 | 233 | 233 |
| Thickness (μm) | Heat-sealable layer (tB) | 30 | 30 | 25 | 30 | 30 | 30 | 50 | 30 | 30 | 30 | 35 | 30 | 30 |
| | Easily adhesive layer (tC) | 5 | 5 | 10 | 5 | 5 | 5 | 5 | 5 | 5 | 5 | 0 | 5 | 5 |
| | Substrate layer (tA) | 75 | 75 | 90 | 75 | 75 | 75 | 188 | 75 | 75 | 75 | 95 | 75 | 75 |
| | Laminated body | 145 | 145 | 160 | 145 | 145 | 145 | 298 | 145 | 145 | 145 | 165 | 145 | 145 |
| Layer thickness constituent ratio | tA/tB | 2.5 | 2.5 | 3.6 | 2.5 | 2.5 | 2.5 | 3.8 | 2.5 | 2.5 | 2.5 | 2.7 | 2.5 | 2.5 |
| | tB/tC | 6.0 | 6.0 | 2.5 | 6.0 | 6.0 | 6.0 | 10.0 | 6.0 | 6.0 | 6.0 | - | 6.0 | 6.0 |
| Lamination method of each layer | | ABC co-extrusion | ABC co-extrusion | ABC co-extrusion | ABC co-extrusion | ABC co-extrusion | ABC co-extrusion | ABC co-extrusion | ABC co-extrusion | AC co-extrusion B thermal lamination | ABC co-extrusion | ABC co-extrusion | ABC co-extrusion | BC co-extrusion A thermal lamination |

(continued)

| Heat-sealable laminated film | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|
| Film thickness deformation rate of layer A | % | 2.3 | 2.2 | 2.3 | 4.4 | 1.1 | 1.0 | 1.9 | 2.5 | 2.3 | Unmeasurable | 2.3 | 2.2 | 2.2 |
| In-plane deformation rate | MD/% | 0.7 | 0.7 | 0.7 | 0.9 | 0.4 | 0.4 | 0.5 | 0.7 | 0.5 | 3.2 | 0.6 | 0.7 | 0.6 |
| | TD/% | 0.7 | 0.8 | 0.6 | 1.1 | 0.4 | 0.3 | 0.6 | 0.6 | 0.5 | 3.9 | 0.6 | 0.6 | 0.7 |
| Adhesion | Initial | A | A | A | A | A | A | A | A | A | A | C | C | Unmeasurable |
| | Durable | A | A | A | A | A | A | A | A | A | A | Unmeasurable | Unmeasurable | Unmeasurable |

As is apparent from Table 1, in Examples 1 to 9, the heat-sealable laminated film having a high adhesion force at a laminated interface in the initial stage and under a moist-heat environment and having a good bonded state when being heat-sealed could be obtained.

Meanwhile, in Comparative Example 1 in which the content of the 4-methyl-1-pentene-based polymer in the substrate layer was small, the film thickness deformation rate of the substrate layer was extremely large, the in-plane deformation rate of the heat-sealable laminated film was also large, and the bonded state when being heat-sealed deteriorated.

In Comparative Example 2 in which the easily adhesive layer was not provided and Comparative Example 3 in which the easily adhesive layer did not contain the 4-methyl-1-pentene copolymer, the adhesion force at the laminated interface in the initial stage and under the moist-heat environment was reduced. Furthermore, in Comparative Example 4 in which the substrate layer and the easily adhesive layer were thermally laminated, the adhesion force at the laminated interface in the initial stage and under the moist-heat environment was significantly reduced.

INDUSTRIAL APPLICABILITY

The heat-sealable laminated film of the present invention is highly industrially applicable because the heat-sealable laminated film does not cause peeling between layers with respect to various planar or film-shaped adherends such as a metal, glass, and a resin regardless of being reinforced with a fiber, has an excellent bonding force, has strong durability even in severe durability evaluation, and can suppress bonding failure by keeping the film thickness deformation rate of the substrate layer that can withstand heat during bonding molding small.

**Claims**

1. A heat-sealable laminated film comprising a layer B, a layer C, a layer A, a layer C, and a layer B in this order, at least the layer C, the layer A, and the layer C being laminated by co-extrusion,
   wherein

   the layer A contains 100 to 70% by mass of a polymer A1 containing 90 mol% or more and 100 mol% or less of a constitutional unit derived from 4-methyl-1-pentene with respect to all constitutional units,
   the layer B contains 100 to 70% by mass of a heat-sealable polyolefin B1, and
   the layer C contains 50% by mass or more of a copolymer C1 containing 60 mol% or more and 99 mol% or less of a constitutional unit derived from 4-methyl-1-pentene and 1 mol% or more and 40 mol% or less of a constitutional unit derived from an $\alpha$-olefin having 2 or more and 20 or less carbon atoms other than 4-methyl-1-pentene.

2. The heat-sealable laminated film according to claim 1, wherein when a melting peak temperature measured by a DSC for the heat-sealable polyolefin B1 (a median value between a minimum value and a maximum value when the heat-sealable polyolefin B1 has a plurality of melting peak temperatures) is taken as a melting point $T_{mB1}$, a film thickness deformation rate of the layer A when a load of 3 MPa is applied at a temperature of $T_{mB1}+30°C$ for 10 minutes is 5% or less.

3. The heat-sealable laminated film according to claim 1 or 2, wherein the polymer A1 contains 100 mol% of the constitutional unit derived from 4-methyl-1-pentene with respect to all the constitutional units.

4. The heat-sealable laminated film according to any one of claims 1 to 3, wherein the layer A contains 100% by mass of the polymer A1.

5. The heat-sealable laminated film according to any one of claims 1 to 4, wherein when a film thickness of the layer A is taken as tA, a film thickness of the layer B is taken as tB, and a film thickness of the layer C is taken as tC, the following formulas (1) and (2) are satisfied.

$$2 \le tA/tB \le 5 \quad (1)$$

$$1 \le tB/tC \le 100 \quad (2)$$

6. The heat-sealable laminated film according to any one of claims 1 to 5, wherein the heat-sealable polyolefin B1 contains a modified product modified with an acid anhydride, has an acid anhydride content of 0.1 to 3% by mass, and has an extraction amount of a low molecular weight component having a number average molecular weight of 1000 or less with acetone of less than 1% by mass.

7. A roll obtained by rolling the heat-sealable laminated film according to any one of claims 1 to 6 in a machine direction.

## INTERNATIONAL SEARCH REPORT

International application No.

**PCT/JP2022/022448**

### A. CLASSIFICATION OF SUBJECT MATTER

*B32B 27/32*(2006.01)i; *C08F 210/14*(2006.01)i; *C09J 7/24*(2018.01)i; *C09J 7/29*(2018.01)i; *C09J 7/30*(2018.01)i; *C09J 123/00*(2006.01)i; *C09J 123/26*(2006.01)i

FI: B32B27/32 E; C08F210/14; C09J7/24; C09J7/29; C09J7/30; C09J123/00; C09J123/26

According to International Patent Classification (IPC) or to both national classification and IPC

### B. FIELDS SEARCHED

Minimum documentation searched (classification system followed by classification symbols)

B32B27/32; C08F210/14; C09J7/24; C09J7/29; C09J7/30; C09J123/00; C09J123/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2003-92089 A (DAINIPPON PRINTING CO., LTD.) 28 March 2003 (2003-03-28) claims, paragraphs [0041]-[0045], example 10, fig. 1-8 | 1-7 |
| A | JP 2017-36354 A (FUJIMORI KOGYO CO., LTD.) 16 February 2017 (2017-02-16) entire text, all drawings | 1-7 |
| A | WO 2006/120983 A1 (MITSUI CHEMICALS INC.) 16 November 2006 (2006-11-16) entire text, all drawings | 1-7 |
| A | JP 2004-82717 A (MITSUI CHEMICALS INC.) 18 March 2004 (2004-03-18) entire text, all drawings | 1-7 |
| A | JP 2020-167212 A (MITSUI CHEMICALS TOHCELLO, INC.) 08 October 2020 (2020-10-08) entire text, all drawings | 1-7 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 June 2022** | **05 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/022448**

| Patent document cited in search report | | | Publication date (day/month/year) | Patent family member(s) | | | Publication date (day/month/year) |
|---|---|---|---|---|---|---|---|
| JP | 2003-92089 | A | 28 March 2003 | (Family: none) | | | |
| JP | 2017-36354 | A | 16 February 2017 | US | 2019/0001634 | A1 | |
| | | | | US | 2021/0008854 | A1 | |
| | | | | WO | 2017/037525 | A1 | |
| | | | | EP | 3333234 | A1 | |
| | | | | EP | 3736130 | A1 | |
| | | | | EP | 3736131 | A1 | |
| WO | 2006/120983 | A1 | 16 November 2006 | CN | 101175637 | A | |
| | | | | KR | 10-2008-0012356 | A | |
| | | | | TW | 200706364 | A | |
| JP | 2004-82717 | A | 18 March 2004 | (Family: none) | | | |
| JP | 2020-167212 | A | 08 October 2020 | WO | 2020/196497 | A1 | |
| | | | | CN | 113557136 | A | |
| | | | | KR | 10-2021-0121205 | A | |
| | | | | TW | 202043025 | A | |

Form PCT/ISA/210 (patent family annex) (January 2015)

**EP 4 371 769 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6484081 B
- JP 6621262 B
- JP 2020111731 A